# EUROPEAN PATENT SPECIFICATION

(11) **EP 4 314 974 B1**
(45) Date of publication and mention of the grant of the patent: **03.06.2026**
(21) Application number: 22710203.5
(22) Date of filing: 25.02.2022
(51) Int. Cl.: G05D 1/00

(54) **IMPROVED NAVIGATION FOR A ROBOTIC WORK TOOL**
VERBESSERTE NAVIGATION FÜR EIN ROBOTER-ARBEITSGERÄT
NAVIGATION AMÉLIORÉE POUR UN OUTIL DE TRAVAIL ROBOTIQUE

(30) Priority: 22.03.2021 SE 2150327
(43) Date of publication of application: 07.02.2024
(73) Proprietor: HUSQVARNA AB, 561 82 Huskvarna (SE)
(72) Inventor: MÅRTENSSON, Anton, 553 55 JÖNKÖPING (SE); PETERSSON, Jimmy, 553 33 JÖNKÖPING (SE); HELLSIN, Beppe, 554 73 JÖNKÖPING (SE)
(86) International application number: PCT/SE2022/050195
(87) International publication number: WO 2022/203562

(56) References cited:
- WO-A1-2016/097891
- WO-A1-2020/014706
- US-A1- 2017 361 468
- US-A1- 2018 321 687
- US-A1- 2018 329 617
- KARPYSHEV PAVEL ET AL: "Autonomous Mobile Robot for Apple Plant Disease Detection based on CNN and Multi-Spectral Vision System", 2021 IEEE/SICE INTERNATIONAL SYMPOSIUM ON SYSTEM INTEGRATION (SII), IEEE, 11 January 2021 (2021-01-11), pages 157 - 162, XP033891133, DOI: 10.1109/IEEECONF49454.2021.9382649

## Description

### TECHNICAL FIELD

This application relates to robotic lawnmowers and in particular to a system and a method for providing an improved navigation for a robotic lawnmower.

### BACKGROUND

Automated or robotic power tools such as robotic lawnmowers are becoming increasingly more popular. In a typical deployment a work area, such as a garden, the work area is enclosed by a boundary with the purpose of keeping the robotic lawnmower inside the work area. The work area may also be limited by objects such as walls or rocks. The boundary may be a virtual boundary such as provided by a map application or stored coordinates in the robotic lawnmower. Many robotic lawnmowers are arranged to operate and navigate in such a virtually defined work area using a satellite navigations system, such as GNSS, GPS or RTK. The robotic lawnmower may also or alternatively be arranged to operate or navigate utilizing a beacon-based navigation system, such as UWB. Additionally, the boundary may be a physical boundary such as provided by a boundary wire emitting a magnetic field that can be sensed by the robotic lawnmower. In either case, the robotic lawnmower may also be arranged to perform more or less advanced operating patterns, such as for example mowing a lawn so that a specific pattern in the grass is produced, such as when mowing a football field.

This requires that the navigation sensors, irrespective of type, are calibrated and in synch with the control of the propulsion of the robotic work tool or the robotic work tool may escape the work area, or at least not be able to execute a desired operating pattern correctly.

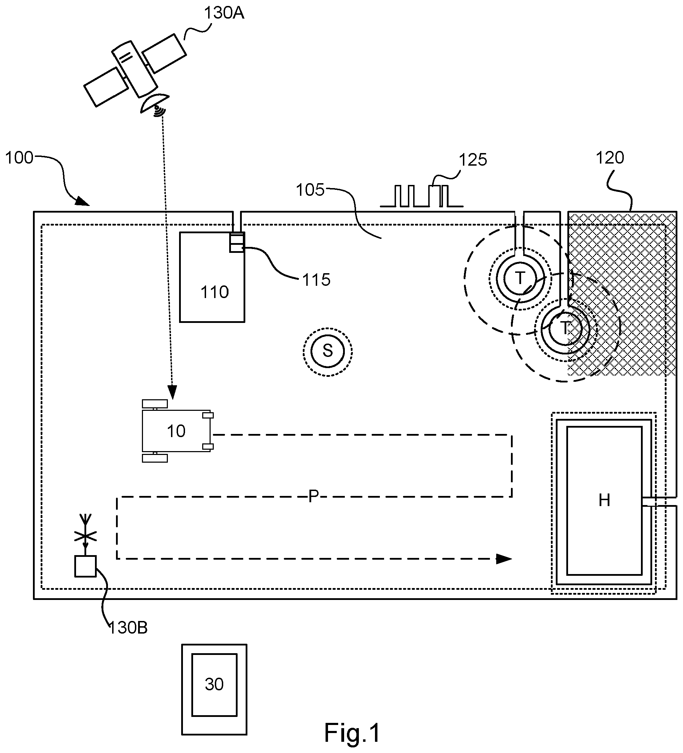

Figure 1 shows a schematic view of an example of a typical work area 105, being a garden, in which a robotic lawnmower 10 is set to operate.

The garden contains a number of obstacles, exemplified herein by a number (2) of trees (T), a stone (S) and a house structure (H). The trees are marked both with respect to their trunks (filled lines) and the extension of their foliage (dashed lines). The garden is enclosed by a boundary wire 120 through which a control signal 125 is transmitted by a signal generator 115 housed in a charging station 110, the control signal 125 generating a magnetic field that can be sensed by the robotic work tool 10. In this example the boundary wire 120 is laid so that so-called islands are formed around the trees and the house. The garden also comprises or is in the line of sight or within communication range of at least one signal navigation device 130. In this example the signal navigation device is exemplified as a satellite 130A and a beacon 130B, such as a RTK base station, but it should be noted that it may also be any number of satellites and/or beacons. The use of satellite and/or beacon navigation enables for a boundary that is virtual, in addition to or as an alternative to the boundary wire 120. A virtual boundary 120' is indicated in figure 1 by the dotted line. From hereon there will be made no difference between the boundary being defined by the boundary wire 120 or as a virtual boundary 120' and the boundary of the work area 105 will hereafter simply be referred to as the boundary 120, unless otherwise specifically mentioned. In the example of figure 1, the robotic work tool is set to operate according to a specific pattern P indicated by the dashed arrow in figure 1.

In order to control the robotic work tool more efficiently, the robotic work tool 10 may be connected to a user equipment 30, such as a smartphone, executing a robotic work tool control application. The robotic work tool control application receives information from the robotic work tool in order to provide updated status reports to an operator. The operator is also enabled to provide commands to the robotic work tool 10 through the robotic work tool controlling application. The commands may be for controlling the propulsion of the robotic work tool, to perform a specific operation or regarding scheduling of the robotic work tool's operation.

As the work area may comprise many different structures, and may also be in an area where there are many surrounding structures, some parts of the work area may not provide ample signal reception, i.e. the satellite signals and/or the beacon (including the base station if using a RTK system) signals are not received at a quality or strength level that is adequate for proper processing of the signal. In such areas, the robotic work tool may not be able to perform its operation adequately as the navigation may suffer. Such areas are indicated by the shaded areas behind the trees in figure 1.

Previous attempts at finding solutions for reducing errors due to bad signal reception includes adding beacons and/or to navigate using deduced reckoning. Deduced reckoning may, however, not be accurate enough for precise operation patterns and the accuracy of deduced reckoning also diminishes over time requiring re-calibrations. The deduced reckoning is also highly affected by environmental factors imposing for example wheel slip when the work area is muddy or otherwise slippery.

Other such attempts have been proposed for unrelated robots, such as vacuum cleaners. One example is disclosed in the patent document published as US2018329617A1 which discloses a method of operating a user terminal includes receiving occupancy data for an operating environment responsive to navigation of the operating environment by a mobile robot, and displaying a visual representation of the operating environment based on the occupancy data. The method further includes receiving information identifying a plurality of electronic devices that are local to the operating environment and respective operating states thereof, and populating the visual representation of the operating environment with visual indications of respective spatial locations of the electronic devices in the operating environment and status indications of the respective operating states of the electronic devices. Related methods for controlling the electronic devices based on their respective spatial locations and the relative spatial context of the operating environment are also discussed.

Another example is disclosed in the patent document published as US2018321687A1 which discloses a method of operating a computing device includes receiving occupancy data for an operating environment of a mobile robot based on localization data detected by at least one localization sensor of the mobile robot responsive to navigation thereof in the operating environment, and receiving signal coverage data for the operating environment based on wireless communication signals acquired by at least one wireless receiver of the mobile robot responsive to navigation thereof in the operating environment. The wireless communication signals are transmitted by at least one electronic device that is local to the operating environment. The method further includes generating a map indicating coverage patterns of the wireless communication signals at respective locations in the operating environment by correlating the occupancy data and the signal coverage data. Related methods, mobile robots, and user terminals are also discussed.

Another example is disclosed in the patent document published as WO2016097891A1 which discloses a robotic vehicle that may include one or more functional components configured to execute a lawn care function, a sensor network comprising one or more sensors configured to detect conditions proximate to the robotic vehicle, a positioning module configured to determine robotic vehicle position using a first sensor of the sensor network, and a position quality analysis module configured to perform a qualitative assessment of position information determined via the first sensor. The position quality analysis module is further configured to determine whether the position information determined via the first sensor is indicative of an impaired area.

Thus, there is a need for an improved manner of enabling a robotic work tool to continue operation even in areas with bad signal reception.

### SUMMARY

It is therefore an object of the teachings of this application to overcome or at least reduce those problems by providing a robotic work tool system comprising a robotic work tool, being a robotic lawnmower, the robotic work tool comprising a satellite signal navigation device, an optical navigation sensor and a controller, wherein the controller is configured to: determine whether an area to be operated in is an area of insufficient signal reception (ISR) and to operate in the area of insufficient signal reception (ISR) utilizing the optical navigation sensor in a VSLAM-navigation mode and in a time of day indicating sufficient lighting as per the appended claims.

The robotic work tool is thus enabled to operate smoothly and seamlessly with a maintained navigation. It should be noted that the present teachings relate to ensuring a proper navigation of a robotic work tool.

In some embodiments the controller is further configured to determine whether an area to be operated in is an area of insufficient signal reception (ISR) by executing an operating plan indicating areas with sufficient signal reception and areas of insufficient signal reception (ISR).

In some embodiments the controller is further configured to determine that an area is an area of insufficient signal reception (ISR) based on the number of and/or quality of signal received by the signal navigation device and to register a location of the area of insufficient signal reception (ISR).

In some embodiments the controller is further configured to determine that VSLAM navigation is active as the area of insufficient signal reception is encountered.

In some embodiments the controller is further configured to determine the area of insufficient signal reception is encountered as the area of insufficient signal reception is detected based on received signals.

In some embodiments the controller is further configured to determine the area of insufficient signal reception is encountered as the robotic work tool is approaching the location of the area of insufficient signal reception.

In some embodiments the time of day indicating sufficient lighting is determined based on time of day, location and/or season

In some embodiments the time of day indicating sufficient lighting is further determined based on weather data.

In some embodiments the time of day indicating sufficient lighting is determined based on information received from a server application.

In some embodiments the operating plan is received from a server application.

In some embodiments the controller is further configured to determine the operating plan.

It is also an object of the teachings of this application to overcome the problems by providing a method for use in a robotic work tool system comprising a robotic work tool, being a robotic lawnmower, the robotic work tool comprising a satellite signal navigation device, and an optical navigation sensor, wherein the method comprises: determining whether an area to be operated in is an area of insufficient signal reception (ISR) and operating in the area of insufficient signal reception (ISR) utilizing the optical navigation sensor in a VSLAM-navigation mode and in a time of day indicating sufficient lighting as per the appended claims.

### BRIEF DESCRIPTION OF THE DRAWINGS

The invention will be described in further detail under reference to the accompanying drawings in which:
Figure 1 shows an example of a robotic work tool system being a robotic lawnmower system;
Figure 2A shows a robotic lawnmower according to some embodiments of the teachings herein;
Figure 2B shows a schematic view of the components of a robotic work tool being a robotic lawnmower according to some example embodiments of the teachings herein;
Figure 3 shows a schematic view of a robotic work tool system (400) according to some example embodiments of the teachings herein; and
Figure 4 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. Like reference numbers refer to like elements throughout.

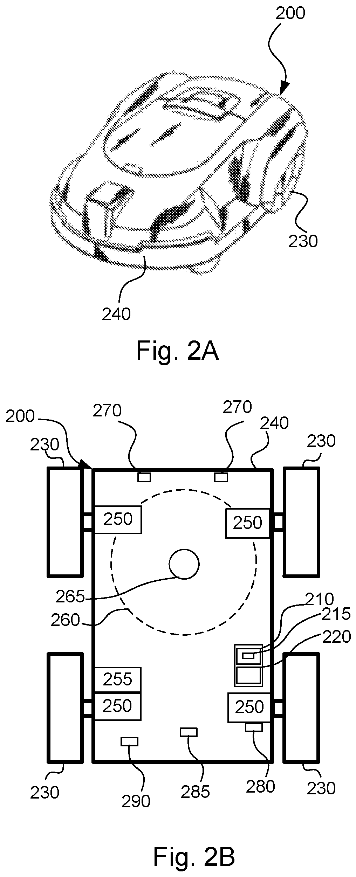

Figure 2A shows a perspective view of a robotic work tool 200, being a robotic lawnmower 200, having a body 240 and a plurality of wheels 230 (only one side is shown). The robotic work tool 200 may be a multi-chassis type or a mono-chassis type (as in figure 2A). A multi-chassis type comprises more than one main body parts that are movable with respect to one another. A mono-chassis type comprises only one main body part.

It should also be noted that the robotic lawnmower is a self-propelled robotic lawnmower, capable of autonomous navigation within a work area, where the robotic lawnmower propels itself across or around the work area in a pattern (random or predetermined).

Figure 2B shows a schematic overview of the robotic lawnmower 200. In this example embodiment the robotic lawnmower 200 is of a mono-chassis type, having a main body part 240. The main body part 240 substantially houses all components of the robotic lawnmower 200. The robotic lawnmower 200 has a plurality of wheels 230. In the exemplary embodiment of figure 2B the robotic lawnmower 200 has four wheels 230, two front wheels and two rear wheels. At least some of the wheels 230 are drivably connected to at least one electric motor 250. It should be noted that even if the description herein is focused on electric motors, combustion engines may alternatively be used, possibly in combination with an electric motor. In the example of figure 2B, each of the wheels 230 is connected to a common or to a respective electric motor 255 for driving the wheels 230 to navigate the robotic lawnmower 200 in different manners. The wheels, the motor 250 possibly including a battery are thus examples of components making up a propulsion device. By controlling the motors 250, the propulsion device may be controlled to propel the robotic lawnmower 200 in a desired manner, and the propulsion device will therefore be seen as synonymous with the motor(s) 250.

The robotic lawnmower 200 also comprises a controller 210 and a computer readable storage medium or memory 220. The controller 210 may be implemented using instructions that enable hardware functionality, for example, by using executable computer program instructions in a general-purpose or special-purpose processor that may be stored on the memory 220 to be executed by such a processor. The controller 210 is configured to read instructions from the memory 220 and execute these instructions to control the operation of the robotic lawnmower 200 including, but not being limited to, the propulsion and navigation of the robotic lawnmower.

The controller 210 in combination with the electric motor 250 and the wheels 230 forms the base of a navigation system (possibly comprising further components) for the robotic lawnmower, enabling it to be self-propelled as discussed under figure 2A,

The controller 210 may be implemented using any suitable, available processor or Programmable Logic Circuit (PLC). It should be noted that the controller may comprise more than one processor or other controlling circuit. For example there may be one controller for controlling the overall operation, and one controller for some or any of the devices. For the context of this text, all such processors or controllers will be seen as comprised in the one controller 210. The memory 220 may be implemented using any commonly known technology for computer-readable memories such as ROM, FLASH, DDR, or some other memory technology.

The robotic lawnmower 200 is further arranged with a wireless communication interface 215 for communicating with other devices, such as a server, a personal computer, a smartphone, the charging station, and/or other robotic lawnmowers.

The communication interface 215 is also used to receive navigation signals from the beacon in embodiments where the beacon is arranged for wireless communication, such as in RTK enabled implementations and embodiments.

Examples of such wireless communication devices are Bluetooth^{®}, WiFi^{®} (IEEE802.11b), Global System Mobile (GSM) and LTE (Long Term Evolution), to name a few. The robotic lawnmower 200 may be arranged to communicate with a user equipment for providing information regarding status, location, and progress of operation to the user equipment as well as receiving commands or settings from the user equipment.

The robotic lawnmower 200 also comprises a grass cutting device 260, such as a rotating blade 260 driven by a cutter motor 265. As a skilled person would understand the cutter motor 265 is accompanied or supplemented by various other components, such as a drive shaft to enable the driving of the grass cutting device, taken to be understood as included in the cutter motor 265. The cutter motor 265 will therefore be seen as representing a cutting assembly 265.

The robotic lawnmower 200 further comprises at least one optical navigation sensor 285. The optical navigation sensor may be a camera-based sensor and/or a laser-based sensor. In an robotic lawnmower according to the present teachings, the robotic lawnmower comprises specifically an optical navigation sensor 285 being arranged to perform SLAM navigation (Simultaneous Localization And Mapping) in cooperation with the controller 210 (possibly a dedicated controller part of the sensor, but seen as part of the main controller 210 herein). In the case the sensor is camera based, it is arranged to perform VSLAM (Visual Simultaneous Localization And Mapping). Camera-based sensors have an advantage over laser-based sensors in that they are generally cheaper and also allow for other usages.

The robotic lawnmower 200 further comprises at least one signal navigation sensor, such as a beacon navigation sensor and/or a satellite navigation sensor 290.

The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon.

The satellite navigation sensor may be a GPS (Global Positioning System) device, RTK (Real-Time Kinetics) device or other Global Navigation Satellite System (GNSS) device. In embodiments, where the robotic lawnmower 200 is arranged with a navigation sensor, the magnetic sensors 270 as will be discussed below are optional. In embodiments relying (at least partially) on a navigation sensor, the work area may be specified as a virtual work area in a map application stored in the memory 220 of the robotic lawnmower 200. The virtual work area may thus be defined by a virtual boundary.

As would be understood by a skilled person, the robotic lawnmower may comprise more than one navigation sensor, and they may be of different types. In specific embodiments, the robotic lawnmower 200 comprises at least one camera-based sensor 285 and at least one RTK navigation sensor 290.

In the examples that will be discussed herein the satellite navigation sensor is a satellite navigation sensor such as GPS, GNSS or a supplemental satellite navigation sensor such as RTK.

The robotic lawnmower 200 may also or alternatively comprise deduced reckoning sensors 280. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel. The deduced reckoning sensors may operate in coordination with the optical navigation sensor 285, so that SLAM navigation is improved.

For enabling the robotic lawnmower 200 to navigate with reference to a boundary wire emitting a magnetic field caused by a control signal transmitted through the boundary wire, the robotic lawnmower 200 is, in some embodiments, further configured to have at least one magnetic field sensor 270 arranged to detect the magnetic field and for detecting the boundary wire and/or for receiving (and possibly also sending) information to/from a signal generator (will be discussed with reference to figure 1). In some embodiments, the sensors 270 may be connected to the controller 210, possibly via filters and an amplifier, and the controller 210 may be configured to process and evaluate any signals received from the sensors 270. The sensor signals are caused by the magnetic field being generated by the control signal being transmitted through the boundary wire. This enables the controller 210 to determine whether the robotic lawnmower 200 is close to or crossing the boundary wire, or inside or outside an area enclosed by the boundary wire.

As mentioned above, in some embodiments, the robotic lawnmower 200 is arranged to operate according to a map of the work area 205 (and possibly the surroundings of the work area 205) stored in the memory 220 of the robotic lawnmower 200. The map may be generated or supplemented as the robotic lawnmower 200 operates or otherwise moves around in the work area 205.

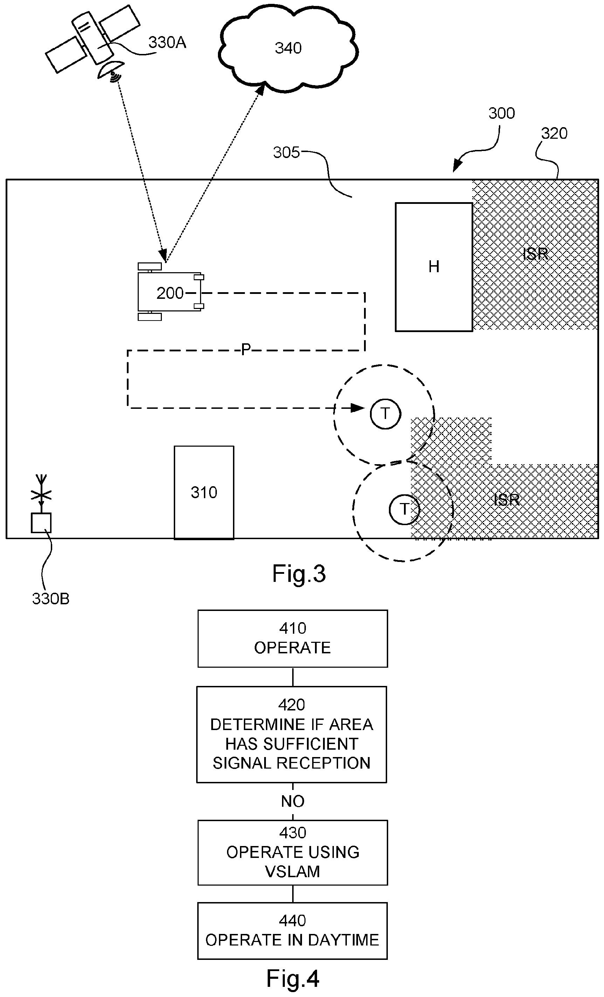

Figure 3 shows a schematic view of a robotic lawnmower system 300 in some embodiments. The schematic view is not to scale. The robotic lawnmower system 300 of figure 3, corresponds in many aspects to the robotic lawnmower system 100 of figure 1, except that the robotic lawnmower system 300 of figure 3 comprises a robotic lawnmower 200 according to the teachings herein. It should be noted that the work area shown in figure 3 is simplified for illustrative purposes but may contain some or all of the features of the work area of figure 1, and even other and/or further features as will be hinted at below.

The robotic lawnmower system 300 comprises a charging station 310 which in some embodiments is arranged with a signal generator (not shown) for providing a control signal through a boundary wire 320. The robotic lawnmower system 300 is further arranged to utilize at least one signal navigation device 330. In the example of figure 3 two options are shown, a first being at least one satellite 330A (only one shown, but it should be clear that a minimum of three are needed for an accurate 2 dimensional location). The second option being at least one beacon, such as an RTK beacon or base station 330B (only one base station/beacon shown).

The work area 305 is in this application exemplified as a garden, but can also be other work areas as would be understood. As hinted at above, the garden may contain a number of obstacles, for example a number of trees, stones, slopes and houses or other structures. In some embodiments the robotic lawnmower is arranged or configured to traverse and operate in a work area that is not essentially flat, but contains terrain that is of varying altitude, such as undulating, comprising hills or slopes or such. The ground of such terrain is not flat and it is not straightforward how to determine an angle between a sensor mounted on the robotic lawnmower and the ground. The robotic lawnmower is also or alternatively arranged or configured to traverse and operate in a work area that contains obstacles that are not easily discerned from the ground. Examples of such are grass or moss covered rocks, roots or other obstacles that are close to ground and of a similar colour or texture as the ground. The robotic lawnmower is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 305 exemplified with referenced to figure 4, may thus be such a non-uniform work area as disclosed in this paragraph that the robotic lawnmower is arranged to traverse and/or operate in.

The robotic lawnmower system 300 also comprises or is arranged to be connected to a user equipment (not shown in figure 3, but referenced 30 in figure 1). As discussed above the user equipment is configured to execute a robotic lawnmower controlling application that receives information from the robotic lawnmower 200 and is able to provide commands to the robotic lawnmower 200. The robotic lawnmower system 300 may alternatively or additionally comprise or be arranged to be connected to a server application, such as a cloud server application 340. The connection to the server application 340 may be direct from the robotic lawnmower 200, direct from the user equipment, indirect from the robotic lawnmower 200 via the charging station, and/or indirect from the robotic lawnmower 200 via the user equipment.

In the below several embodiments of how the robotic lawnmower may be adapted will be disclosed. It should be noted that all embodiments may be combined in any combination providing a combined adaptation of the robotic lawnmower.

Figure 4 shows a flowchart for a general method according to herein. The method is for use in a robotic lawnmower as in figures 2A and 2B. The improved manner for handling error codes as discussed herein will be discussed with simultaneous reference to figure 3 and figure 4.

Figure 3 shows examples of areas where signal reception may not be reliable, i.e. areas of inferior signal reception. Such areas are defined as areas where a sufficient number of signals is not received at a signal quality level enabling for an accurate position determination. One examples of such signals are signals which are received at a signal quality level not exceeding a threshold value. Another example is receiving signals that are of a quality level where the RTK equations provide more than one solution which lowers the accuracy of the position determination. The sufficient number of signals is dependent on the application and requirements of the operation as a skilled person would understand. In figure 3, the areas are shown as shaded and referenced ISR.

As the robotic lawnmower 200 is operating 410 in the work area 305 and the robotic lawnmower determines that an area of insufficient signal reception is encountered 420 (such as in detecting it or approaching a location for a known area), the robotic lawnmower 200 according to herein is arranged to switch operating mode from a satellite/signal-based navigation mode, hereafter referred to as a satellite-based mode, using signal navigation sensors or satellite navigation sensors 290 to a SLAM-based navigation mode based on the optical navigation sensor 285 based on SLAM i.e. VSLAM. The optical navigation sensor 285 hereafter also being referred to as a SLAM device 285, and in some embodiments more specifically a VSLAM device being an example of a SLAM device.

In the satellite-based mode, the robotic lawnmower 200 is configured to operate by relying on the satellite navigation device. In some embodiments the robotic lawnmower 200 is also configured to rely on the SLAM navigation device, in combination with the satellite navigation device.

In such embodiments, the controller is configured to determine its position based at least on the satellite navigation device. However, the position determination may also be supplemented by the SLAM device and possibly also by other navigation devices, such as deduced reckoning devices. In some embodiments the input received from the satellite navigation device is prioritized to be at a higher level of reliability as the other devices including the SLAM device. In some embodiments the input received from the satellite navigation device is prioritized to be at a same or similar level of reliability as the other devices including the SLAM device.

In the SLAM-based mode, the robotic lawnmower 200 is configured to operate by relying on the SLAM device 285. In some embodiments the robotic lawnmower 200 is also configured to rely on the satellite navigation device 290, in combination with the SLAM device.

In such embodiments, the controller is configured to determine its position based at least on the SLAM device. However, the position determination may also be supplemented by the satellite navigation device and possibly also by other navigation devices, such as deduced reckoning devices. In some embodiments the input received from the SLAM device is prioritized to be at a higher level of reliability than the satellite navigation device.

This provides for a more accurate and reliable navigation than simply relying on deduced reckoning as in the prior art.

The robotic lawnmower is arranged to register and store areas where satellite (or other signals) are not reliably received. That is, as an ISR is encountered 420, the location (possibly including extension) of the area is stored in the memory of the robotic lawnmower. Alternatively or additionally, the location is stored in a server application. The robotic lawnmower may thus detect (and register) the ISRs by its own and/or download locations for ISR from the server application 340.

In subsequent operation, the robotic lawnmower may thus prematurely switch (if not already active) to SLAM navigation. The robotic lawnmower is thus configured to determine that SLAM navigation is active as an ISR is encountered as in detected or that the robotic lawnmower is approaching the location of a registered ISR.

However, the inventors have realized a further problem, in that the accuracy of VSLAM in particular may suffer from bad lighting conditions. However, instead of simply putting lights in the work area, the inventors have realized that since the work area is usually relatively large, and especially for modern robotic lawnmowers where the robotic lawnmower may be arranged to operate in sessions specific to different work areas or parts of the work area, so-called missions, it is possible to schedule the operation of the robotic lawnmower so that areas where good lighting is needed are only serviced during times where there is good lighting, i.e. daytime 440.

The robotic lawnmower is thus configured to also determine which areas are to be operated at what times. In some embodiments ISRs are only scheduled to be operated during daytime. Daytime is defined as the hours in a day, where daylight is available (as this may differ depending on location and season). In some such embodiments, the daytime is further defined based on weather data such as weather reports. Such daylight information may be retrieved from the server application 340. In some embodiments the server application 340 is responsible for the planning and the robotic lawnmower executes the plan.

It should be noted that the server application may consist of several different server applications that are accessed for different purposes. Specifically, there may be one server application for retrieving weather data and one for retrieving the operating plan.

In some embodiments a time of day indicating sufficient lighting is a time of day indicating daylight as discussed in the above.

The robotic lawnmower is thus configured to retrieve an operating plan indicating which areas are to be operated in daylight or other times of sufficient lighting. The plan may also indicate what areas are to be operated in irrespective of lighting conditions.

## Claims

1. A robotic lawnmower system (300) comprising a robotic lawnmower (200), the robotic lawnmower (200) comprising a satellite signal navigation device (290), an optical navigation sensor (285) and a controller (210), wherein the controller (210) is configured to:
determine (420) whether an area to be operated in based on the satellite signal navigation device (290) is an area of insufficient signal reception (ISR), wherein an area of insufficient signal reception is an area where a sufficient number of signals are not received at a signal quality level enabling an accurate position determination, and, if so, operate in the area of insufficient signal reception (ISR) utilizing the optical navigation sensor (430) in a VSLAM-navigation mode and only in day time during the times that daylight is available, wherein the controller is further configured to
determine whether an area to be operated in is an area of insufficient signal reception (ISR) by executing an operating plan indicating areas with sufficient signal reception and areas of insufficient signal reception (ISR).

2. The robotic lawnmower system (300) according to any preceding claim, wherein the controller is further configured to
determine that an area is an area of insufficient signal reception (ISR) based on the number of and/or quality of signal received by the signal navigation device (290) and to
register a location of the area of insufficient signal reception (ISR).

3. The robotic lawnmower system (300) according to any preceding claim, wherein the controller is further configured to determine
that VSLAM navigation is active as the area of insufficient signal reception is encountered.

4. The robotic lawnmower system (300) according to claim 3, wherein the controller is further configured to determine that the area of insufficient signal reception is encountered as the area of insufficient signal reception is detected based on received signals.

5. The robotic lawnmower system (300) according to claim 3 or 4, wherein the controller is further configured to determine that the area of insufficient signal reception is encountered as the robotic lawnmower is approaching the location of the area of insufficient signal reception.

6. The robotic lawnmower system (300) according to any preceding claim, wherein the time of day indicating sufficient lighting is determined based on time of day, location and/or season.

7. The robotic lawnmower system (300) according to any preceding claim, wherein the time of day indicating sufficient lighting is further determined based on weather data.

8. The robotic lawnmower system (300) according to any preceding claim, wherein the time of day indicating sufficient lighting is determined based on information received from a server application (340).

9. The robotic lawnmower system (300) according to any preceding claim, wherein the operating plan is received from a server application (340).

10. The robotic lawnmower system (300) according to any preceding claim, wherein the controller is further configured to determine the operating plan.

11. A method for use in a robotic lawnmower system (300) comprising a robotic lawnmower (200), the robotic lawnmower (200) comprising a satellite signal navigation device (290), and an optical navigation sensor (285), wherein the method comprises:
determining (420) whether an area to be operated in based on the satellite signal navigation device (290) is an area of insufficient signal reception (ISR), wherein an area of insufficient signal reception is an area where a sufficient number of signals are not received at a signal quality level enabling an accurate position determination, and, if so, operating in the area of insufficient signal reception (ISR) utilizing the optical navigation sensor (430) in a VSLAM-navigation mode and only in day time during the times that daylight is available, wherein the method further comprises
determining whether an area to be operated in is an area of insufficient signal reception (ISR) by executing an operating plan indicating areas with sufficient signal reception and areas of insufficient signal reception (ISR).

## Patentansprüche

1. Roboterrasenmähersystem (300), umfassend einen Roboterrasenmäher (200), der Roboterrasenmäher (200) umfassend eine Satellitensignalnavigationsvorrichtung (290), einen optischen Navigationssensor (285) und eine Steuerung (210), wobei die Steuerung (210) konfiguriert ist zum:
Bestimmen (420), ob ein Bereich, in dem zu arbeiten ist, basierend auf der Satellitensignalnavigationsvorrichtung (290), ein Bereich von nicht ausreichendem Signalempfang (ISR) ist, wobei ein Bereich von nicht ausreichendem Signalempfang ein Bereich ist, wo eine ausreichende Anzahl von Signalen nicht auf einem Signalqualitätsniveau empfangen wird, das eine genaue Positionsbestimmung ermöglicht, und, falls ja, Arbeiten in dem Bereich von nicht ausreichendem Signalempfang (ISR), wobei der optische Navigationssensor (430) in einem VSLAM-Navigationsmodus und nur tagsüber während der Zeiten, in denen Tageslicht verfügbar ist, genutzt wird, wobei die Steuerung ferner konfiguriert ist zum
Bestimmen, ob ein Bereich, in dem zu arbeiten ist, ein Bereich von nicht ausreichendem Signalempfang (ISR) ist, durch ein Ausführen eines Arbeitsplans, der die Bereiche mit ausreichendem Signalempfang und die Bereiche von nicht ausreichendem Signalempfang (ISR) anzeigt.

2. Roboterrasenmähersystem (300) nach einem der vorstehenden Ansprüche, wobei die Steuerung ferner konfiguriert ist zum
Bestimmen, dass ein Bereich ein Bereich von nicht ausreichendem Signalempfang (ISR) ist, basierend auf der Anzahl von und/oder der Qualität von einem Signal, das durch die Signalnavigationsvorrichtung (290) empfangen wird, und zum
Verzeichnen einer Stelle des Bereichs von nicht ausreichendem Signalempfang (ISR).

3. Roboterrasenmähersystem (300) nach einem der vorstehenden Ansprüche, wobei die Steuerung ferner konfiguriert ist, um zu bestimmen,
dass die VSLAM-Navigation aktiv ist, wenn auf den Bereich von nicht ausreichendem Signalempfang gestoßen ist.

4. Roboterrasenmähersystem (300) nach Anspruch 3, wobei die Steuerung ferner konfiguriert ist, um zu bestimmen, dass auf den Bereich von nicht ausreichendem Signalempfang gestoßen ist, wenn der Bereich von nicht ausreichendem Signalempfang basierend auf den empfangenen Signalen detektiert wird.

5. Roboterrasenmähersystem (300) nach Anspruch 3 oder 4, wobei die Steuerung ferner konfiguriert ist, um zu bestimmen, dass auf den Bereich von nicht ausreichendem Signalempfang gestoßen ist, wenn sich der Roboterrasenmäher der Stelle des Bereichs von nicht ausreichendem Signalempfang nähert.

6. Roboterrasenmähersystem (300) nach einem der vorstehenden Ansprüche, wobei die Tageszeit, die eine ausreichende Beleuchtung anzeigt, basierend auf der Tageszeit, der Stelle und/oder einer Jahreszeit bestimmt wird.

7. Roboterrasenmähersystem (300) nach einem der vorstehenden Ansprüche, wobei die Tageszeit, die die ausreichende Beleuchtung anzeigt, ferner basierend auf Wetterdaten bestimmt wird.

8. Roboterrasenmähersystem (300) nach einem der vorstehenden Ansprüche, wobei die Tageszeit, die die ausreichende Beleuchtung anzeigt, basierend auf Informationen, die von einer Serveranwendung (340) empfangen werden, bestimmt wird.

9. Roboterrasenmähersystem (300) nach einem der vorstehenden Ansprüche, wobei der Arbeitsplan von einer Serveranwendung (340) empfangen wird.

10. Roboterrasenmähersystem (300) nach einem der vorstehenden Ansprüche, wobei die Steuerung ferner konfiguriert ist, um den Arbeitsplan zu bestimmen.

11. Verfahren zur Verwendung in einem Roboterrasenmähersystem (300), umfassend einen Roboterrasenmäher (200), der Roboterrasenmäher (200) umfassend eine Satellitensignalnavigationsvorrichtung (290) und einen optischen Navigationssensor (285), wobei das Verfahren umfasst:
Bestimmen (420), ob ein Bereich, in dem zu arbeiten ist, basierend auf der Satellitensignalnavigationsvorrichtung (290), ein Bereich von nicht ausreichendem Signalempfang (ISR) ist, wobei ein Bereich von nicht ausreichendem Signalempfang ein Bereich ist, wo eine ausreichende Anzahl von Signalen nicht auf einem Signalqualitätsniveau empfangen wird, das eine genaue Positionsbestimmung ermöglicht, und, falls ja, Arbeiten in dem Bereich von nicht ausreichendem Signalempfang (ISR), wobei der optische Navigationssensor (430) in einem VSLAM-Navigationsmodus und nur tagsüber während der Zeiten, in denen Tageslicht verfügbar ist, genutzt wird, wobei das Verfahren ferner umfasst
Bestimmen, ob ein Bereich, in dem zu arbeiten ist, ein Bereich von nicht ausreichendem Signalempfang (ISR) ist, durch das Ausführen eines Arbeitsplans, der die Bereiche mit ausreichendem Signalempfang und die Bereiche von nicht ausreichendem Signalempfang (ISR) anzeigt.

## Revendications

1. . Système de tondeuse à gazon robotisée (300) comprenant une tondeuse à gazon robotisée (200), la tondeuse à gazon robotisée (200) comprenant un dispositif de navigation à signal satellite (290), un détecteur de navigation optique (285) et un dispositif de commande (210), dans lequel le dispositif de commande (210) est configuré pour :
déterminer (420) si une zone dans laquelle opérer sur la base du dispositif de navigation à signal satellite (290) est une zone de réception de signal insuffisante (ISR), dans lequel une zone de réception de signal insuffisante est une zone où un nombre suffisant de signaux ne sont pas reçus à un niveau de qualité de signal permettant une détermination précise de position, et, dans l'affirmative, opérer dans la zone de réception de signal insuffisante (ISR) utilisant le détecteur optique de navigation (430) dans un mode de navigation VSLAM et uniquement de jour pendant les heures où la lumière du jour est disponible, dans lequel le dispositif de commande est en outre configuré pour
déterminer si une zone dans laquelle opérer est une zone de réception de signal insuffisante (ISR) en exécutant un plan d'exploitation indiquant les zones de réception de signal suffisante et les zones de réception de signal insuffisante (ISR).

2. . Système de tondeuse à gazon robotisée (300) selon l'une quelconque revendication précédente, dans lequel le dispositif de commande est en outre configuré pour
déterminer qu'une zone est une zone de réception de signal (ISR) insuffisante en fonction du nombre de et/ou qualité du signal reçu par le dispositif de navigation de signal (290) et
enregistrer un emplacement de la zone de réception de signal insuffisante (ISR).

3. . Système de tondeuse à gazon robotisée (300) selon l'une quelconque revendication précédente, dans lequel le dispositif de commande est en outre configuré pour déterminer
que la navigation VSLAM est active lorsque la zone de réception de signal est rencontrée.

4. . Système de tondeuse à gazon robotisée (300) selon la revendication 3, dans lequel le dispositif de commande est en outre configuré pour déterminer que la zone de réception de signal insuffisante est rencontrée lorsque la zone de réception de signal insuffisante est détectée sur la base de signaux reçus.

5. . Système de tondeuse à gazon robotisée (300) selon la revendication 3 ou 4, dans lequel le dispositif de commande est en outre configuré pour déterminer que la zone de réception de signal insuffisante est rencontrée lorsque la tondeuse à gazon robotisée s'approche de l'emplacement de la zone de réception de signal insuffisante.

6. . Système de tondeuse à gazon robotisé (300) selon l'une quelconque revendication précédente, dans lequel l'heure de la journée indiquant un éclairage suffisant est déterminée sur la base de l'heure de la journée, de l'emplacement et/ou de la saison.

7. . Système de tondeuse à gazon robotisée (300) selon l'une quelconque revendication précédente, dans lequel l'heure de la journée indiquant un éclairage suffisant est en outre déterminée sur la base de données météorologiques.

8. . Système de tondeuse à gazon robotisée (300) selon l'une quelconque revendication précédente, dans lequel l'heure de la journée indiquant un éclairage suffisant est déterminée sur la base d'informations reçues d'une application serveur (340).

9. . Système de tondeuse à gazon robotisée (300) selon l'une quelconque revendication précédente, dans lequel le plan d'exploitation est reçu d'une application serveur (340).

10. . Système de tondeuse à gazon robotisée (300) selon l'une quelconque revendication précédente, dans lequel le dispositif de commande est en outre configuré pour déterminer le plan d'exploitation.

11. . Procédé destiné à être utilisé dans un système de tondeuse à gazon robotisée (300) comprenant une tondeuse à gazon robotisée (200), la tondeuse à gazon robotisée (200) comprenant un dispositif de navigation à signal satellite (290), un détecteur de navigation optique (285), dans lequel le procédé comprend :
le fait de déterminer (420) si une zone dans laquelle opérer sur la base du dispositif de navigation à signal satellite (290) est une zone de réception de signal insuffisante (ISR), dans lequel une zone de réception de signal insuffisante est une zone où un nombre suffisant de signaux ne sont pas reçus à un niveau de qualité de signal permettant une détermination précise de position, et, dans l'affirmative, opérer dans la zone de réception de signal insuffisante (ISR) utilisant le détecteur de navigation optique (430) dans un mode de navigation VSLAM et uniquement le jour pendant les heures où la lumière du jour est disponible, dans lequel le procédé comprend en outre
le fait de déterminer si une zone à exploiter est une zone de réception de signal insuffisante (ISR) en exécutant un plan d'exploitation indiquant des zones avec réception de signal suffisante et des zones de réception de signal insuffisante (ISR).
